# EUROPEAN PATENT SPECIFICATION

(11) **EP 3 825 158 B1**
(45) Date of publication and mention of the grant of the patent: **11.01.2023**
(21) Application number: 18934280.1
(22) Date of filing: 21.09.2018
(51) Int. Cl.: B60H 1/32, F25D 19/00, F25D 11/00, F24F 1/10, F25B 31/00, F24F 1/12, F24F 13/32

(54) **REFRIGERATION UNIT FOR TRANSPORTATION, AND METHOD OF ASSEMBLING REFRIGERATION UNIT FOR TRANSPORTATION**
KÜHLEINHEIT FÜR DEN TRANSPORT UND VERFAHREN ZUM ZUSAMMENBAU EINER KÜHLEINHEIT FÜR DEN TRANSPORT
UNITÉ DE RÉFRIGÉRATION DESTINÉE AU TRANSPORT, ET PROCÉDÉ D'ASSEMBLAGE D'UNITÉ DE RÉFRIGÉRATION DESTINÉE AU TRANSPORT

(43) Date of publication of application: 26.05.2021
(73) Proprietor: MITSUBISHI HEAVY INDUSTRIES THERMAL SYSTEMS, LTD., 108-8215 Tokyo (JP)
(72) Inventor: TAKAHASHI Wataru, Tokyo 108-8215 (JP); KAI Masakazu, Tokyo 108-8215 (JP)
(74) Representative: Cabinet Beau de Loménie
(86) International application number: PCT/JP2018/035184
(87) International publication number: WO 2020/059142

(56) References cited:
- EP-A1- 0 958 952
- EP-A2- 2 107 324
- EP-B1- 2 107 324
- CN-A- 104 596 141
- JP-A- 2006 071 254
- JP-A- 2012 207 880
- JP-A- 2017 218 109
- JP-A- 2019 052 806
- JP-U- S 629 031
- JP-U- H01 172 907
- US-A- 3 866 867
- US-A1- 2015 338 141

## Description

### [Technical Field]

The present invention relates to a transport chiller unit and a method for assembling the transport chiller unit.

### [Background Art]

A nose mounted-type transport chiller unit attached to a van body front wall above a driver seat of a truck is known. The transport chiller unit is designed to have a casing with a substantially inverted triangular longitudinal sectional shape to avoid a cab tilt path, and an electric compressor is seated in the casing.

On the other hand, PTL 1 discloses a compressor attachment device although the device is not targeted at a transport chiller unit. PTL 1 discloses, as a compressor attachment device capable of easily changing the direction of a compressor, a base provided with a circular projecting portion and a structure in which the compressor is fixed to an attachment plate provided with a round hole that can be fitted to the circular projecting portion, the round hole in the attachment plate with the compressor fixed thereto is fitted to the circular projecting portion of the base, and a positioning hole of the base and an insertion hole of the attachment plate are fixed with a bolt. A technology according to which the round hole and the circular projecting portion thus enable the compressor to rotate, and if the positioning hole of the base and the insertion hole of the attachment plate are located at conforming positions (angles), it is possible to easily change the direction of the compressor and to achieve fixation is disclosed.

### [Citation List]

### [Patent Literature]

[PTL 1]
   Japanese Unexamined Patent Application, Publication No. 2001-21180
[PTL 2]
   EP 2107324 discloses an air treatment unit, particularly for conditioning, refrigeration and the like.

### [Summary of Invention]

### [Technical Problem]

In a case in which the compressor is seated in the transport chiller unit designed to have the casing with a substantially inverted triangular longitudinal sectional shape, the compressor is preferably disposed at a location near a van body front wall where the height of the transport chiller unit in the casing is high, in order to secure a space in the height direction. Further, in the case in which the compressor that is a heavy component is seated in the casing of the transport chiller unit, the compressor is preferably disposed at a position near strength members (a frame and the like) provided inside the casing, in order to secure fixation strength. However, if the compressor is disposed near the strength members such as a body front wall and a frame, it is difficult to secure a workspace above a fastening portion of the compressor, which is needed to replace the compressor for maintenance or the like. It is thus necessary to separate the compressor from the strength members such as a body front wall and a frame in order to secure the workspace. However, enlargement of the dimension of the casing and significant reinforcement to secure the strength are needed to do so, which leads to an increase in size and weight of the casing. Also, since the compressor is a heavy component, this may lead to a difficulty in the positioning or the like of the compressor when the compressor is seated in a limited space in the casing.

The present invention has been made in view of such circumstances, and an object thereof is to provide a transport chiller unit and a method for assembling the transport chiller unit which do not require a fixing operation in a workspace reduced in size by a compressor disposed to be close to and in the vicinity of a body front wall and strength members even in a case in which the compressor is disposed to be close to and in the vicinity of the body front wall in order to secure a space in the height direction or is disposed to be close to and in the vicinity of the strength members such as a frame provided in a casing in order to secure fixation strength, and further, which enables an improvement in seating operability for positioning and the like of the compressor inside the casing.

### [Solution to Problem]

In order to solve the aforementioned problem, a transport chiller unit according to claim 1 and a method for assembling the transport chiller unit according to claim 6 employ the following means.

Specifically, a transport chiller unit according to an aspect of the present invention includes: a casing attached to a van body; a compressor disposed inside the casing to compress a refrigerant; a vibration-isolating member provided below the compressor; a sub-bracket supporting and fixing the vibration-isolating member from a lower side; and a lower portion strength member extending in a horizontal direction as a strength member provided inside the casing, the lower portion strength member supporting the sub-bracket from the lower side and fixing the sub-bracket at a fixation position, and the lower portion strength member is provided with a guide portion that slides the sub-bracket in the horizontal direction and positions the sub-bracket at the fixation position.

The lower portion strength member extending in the horizontal direction as the strength member inside the casing is provided with the guide portion that slides the sub-bracket in the horizontal direction and positions the sub-bracket at the fixation position. It is thus possible to easily perform stable movement of the compressor placed on the lower portion strength member and positioning at the fixation position.

Further, the sub-bracket to which the compressor and the vibration-isolating member are fixed is supported and fixed from the lower side by the lower portion strength member extending in the horizontal direction. It is thus possible to fix the sub-bracket through an access from the lower side of the lower portion strength member. In such a case in which the sub-bracket is fixed through an access from the lower side of the lower portion strength member, and even in a case in which the compressor is disposed to be close to and in the vicinity of a body front wall in order to secure a space in the height direction or is disposed to be close to and in the vicinity of another strength member connected to the lower portion strength member and extending in the vertical direction in order to secure fixation strength, it is not necessary to perform the fixing operation in a workspace (work difficulty space) above the lower portion strength member reduced in size by the compressor disposed to be close to and in the vicinity of the body front wall and another strength member.

Also, the transport chiller unit according to an aspect of the present invention includes a bottom plate with a rectangular shape in a plan view of the guide portion, a pair of side wall plates standing from two facing sides of the bottom plate, and a back wall plate standing from one side that intersects the two facing sides, an inner width dimension between the pair of side wall plates corresponds to a width dimension of the sub-bracket, and the fixation position is defined by the pair of side wall plates and the back wall plate.

The guide portion includes the pair of facing side wall plates, and the inner width dimension between the pair of side wall plates corresponds to the width dimension of the sub-bracket. It is thus possible to easily perform stable movement of the compressor placed between the pair of side wall plates on the lower portion strength member. Also, the guide portion includes the back wall plate that intersects the pair of facing side wall plates. It is thus possible to easily position, as the fixation position of the compressor, the position where the compressor abuts on the back wall plate after being caused to slide along a portion between the pair of side wall plates.

Also, the transport chiller unit according to an aspect of the present invention includes: a bottom plate with a rectangular shape in a plan view of the guide portion, a side wall plate standing from one side of the bottom plate, and a back wall plate standing from another side orthogonal to the one side, and the fixation position is defined by the side wall plate and the back wall plate.

The guide portion is provided with one side wall plate. It is thus possible to easily perform stable movement of an electric compressor unit placed on the lower portion strength member by causing the compressor to slide in a state in which the sub-bracket is caused to follow the one side wall plate. Also, since the guide portion includes the back wall plate orthogonal to the one side wall plate, it is possible to position, as the fixation position of the compressor, the position where the compressor abuts on the back wall plate after being caused to slide along the one side wall plate. Further, since the side wall plate is provided only at one side of the bottom plate, it is possible to curb the weight of the lower portion strength member as compared with the case in which the pair of side wall plates are provided at two facing sides.

Also, the transport chiller unit according to an aspect of the present invention includes a bottom plate with a rectangular shape in a plan view of the guide portion, a drop-in groove portion provided in the bottom plate, and a back wall plate standing from one side of the bottom plate orthogonal to a groove direction of the drop-in groove portion, a groove width dimension of the drop-in groove portion corresponds to a width dimension of the sub-bracket, and the fixation position is defined by the drop-in groove portion and the back wall plate.

The guide portion includes the drop-in groove portion. Since the groove width dimension of the drop-in groove portion corresponds to the width dimension of the sub-bracket, it is possible to easily perform stable movement of the compressor placed in the drop-in groove portion on the lower portion strength member. Also, since the guide portion includes the back wall plate, it is possible to position, as the fixation position of the compressor, the position where the compressor abuts on the back wall plate after being caused to slide along the drop-in groove portion.

In the transport chiller unit according to the present invention, the compressor is disposed in the vicinity of a body front wall of the van body and another strength member that is a strength member provided inside the casing, is connected to the lower portion strength member, and extends in a vertical direction.

It is possible to secure a space in the height direction by disposing the compressor near the body front wall where the height inside the casing is high. Also, it is possible to secure fixation strength by disposing the compressor in the vicinity of another strength member. It is thus possible to secure the fixation strength of the compressor without enlargement of the outer dimension of the casing and significant reinforcement to secure the fixation strength, to secure a workspace for the seating of the compressor, and to improve operability.

Also, in the transport chiller unit according to an aspect of the present invention, the sub-bracket is fixed from the lower side of the lower portion strength member.

It is not necessary to perform the fixing operation in a workspace (work difficulty space) above the lower portion strength member reduced in size by the compressor disposed to be close to and in the vicinity of the body front wall and another strength member, by fixing the sub-bracket from the lower side of the lower portion strength member.

A method for assembling a transport chiller unit according to the present invention as described in claim 6 includes: a compressor assembling step of fixing a sub-bracket below the compressor via a vibration-isolating member; a compressor placement step of placing the sub-bracket fixed to the compressor on a lower portion strength member extending in a horizontal direction as a strength member provided inside the casing; a positioning step of causing the compressor to slide on a guide portion provided at the lower portion strength member and positioning the compressor at a fixation position; and a seating step of fixing the sub-bracket of the compressor positioned by the guide portion from a lower side of the lower portion strength member.

It is possible to easily perform stable movement of the compressor placed on the lower portion strength member and positioning at the fixation position by providing the guide portion that slides the sub-bracket in the horizontal direction and positions the sub-bracket at the fixation position, at the lower portion strength member extending in the horizontal direction as the strength member inside the casing.

Further, it is possible to fix the sub-bracket, to which the compressor and the vibration-isolating member are fixed, through an access from the lower side of the lower portion strength member by supporting and fixing the sub-bracket from the lower side by the lower portion strength member extending in the horizontal direction. In such a case in which the sub-bracket is fixed through an access from the lower side of the lower portion strength member, and even in a case in which the compressor is disposed to be close to and in the vicinity of the body front wall in order to secure a space in the height direction or is disposed to be close to and in the vicinity of another strength member connected to the lower portion strength member and extending in the vertical direction in order to secure fixation strength, it is not necessary to perform the fixing operation in a workspace (work difficulty space) above the lower portion strength member reduced in size by the compressor disposed to be close to and in the vicinity of the body front wall and another strength member.

### [Advantageous Effects of Invention]

According to the transport chiller unit and a method for assembling the transport chiller unit of the present invention, a fixing operation in a workspace reduced in size by the compressor disposed to be close to and in the vicinity of the body front wall and the strength members provided inside the casing is not required even in a case in which the compressor is disposed to be close to and in the vicinity of the body front wall in order to secure a space in the height direction or is disposed to be close to and in the vicinity of the strength members in order to secure fixation strength. Further, it is possible to improve seating operability for positioning and the like of the compressor inside the casing.

### [Brief Description of Drawings]

[Fig. 1]

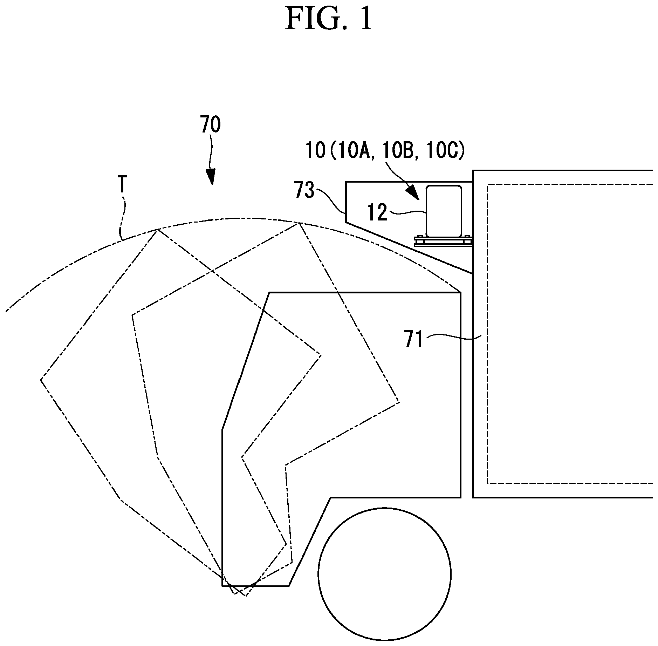

   Fig. 1 is a right side view illustrating a part of a truck with a compressor mounted on a nose mount.
[Fig. 2]

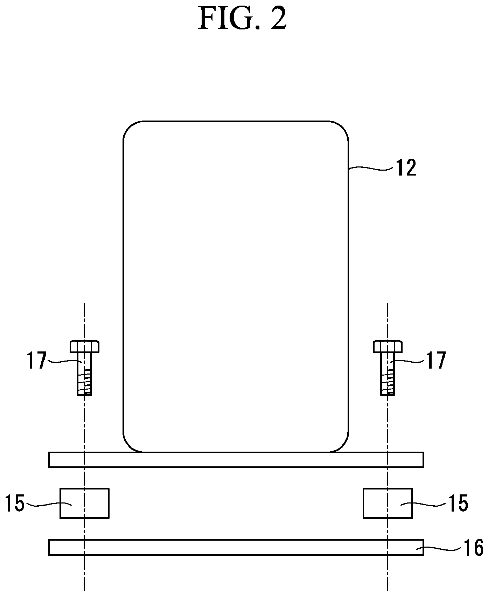

   Fig. 2 is an overview configuration diagram of an overall structure of the compressor in a front view.
[Fig. 3]

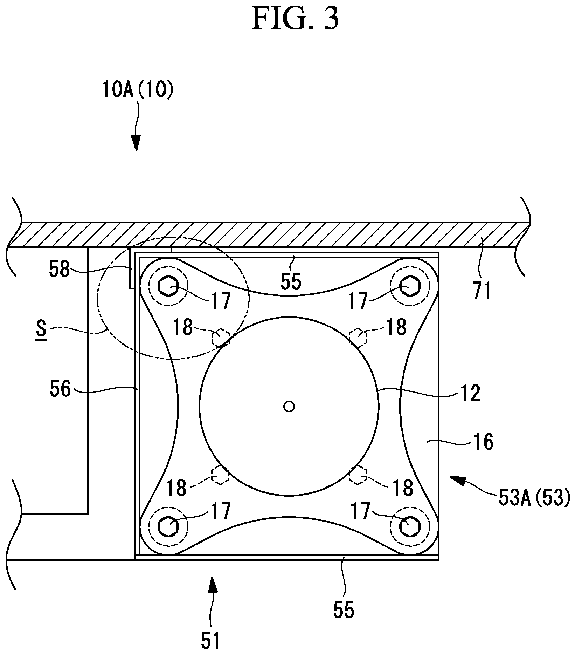

   Fig. 3 is a plan view illustrating a transport chiller unit according to a first embodiment of the present invention.
[Fig. 4]

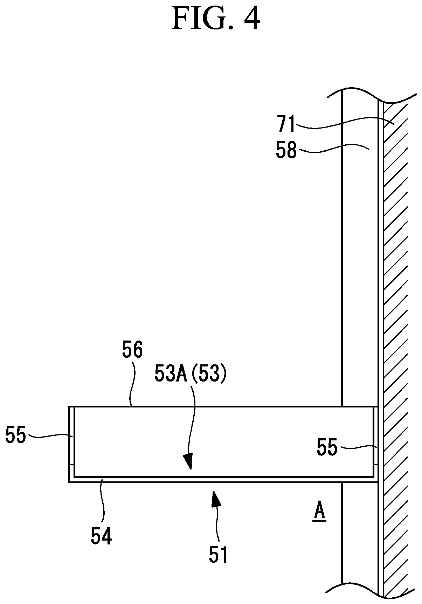

   Fig. 4 is a right side view illustrating a lower portion strength member, a longitudinal strength member (another strength member), and a body front wall according to the first embodiment of the present invention.
[Fig. 5]

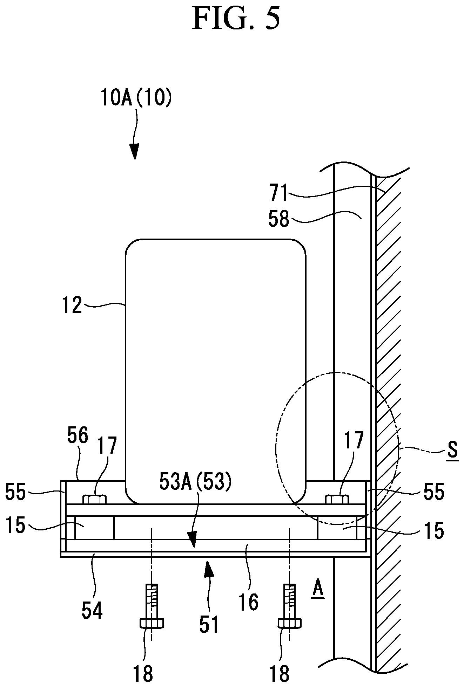

   Fig. 5 is a right side view illustrating the transport chiller unit according to the first embodiment of the present invention.
[Fig. 6]

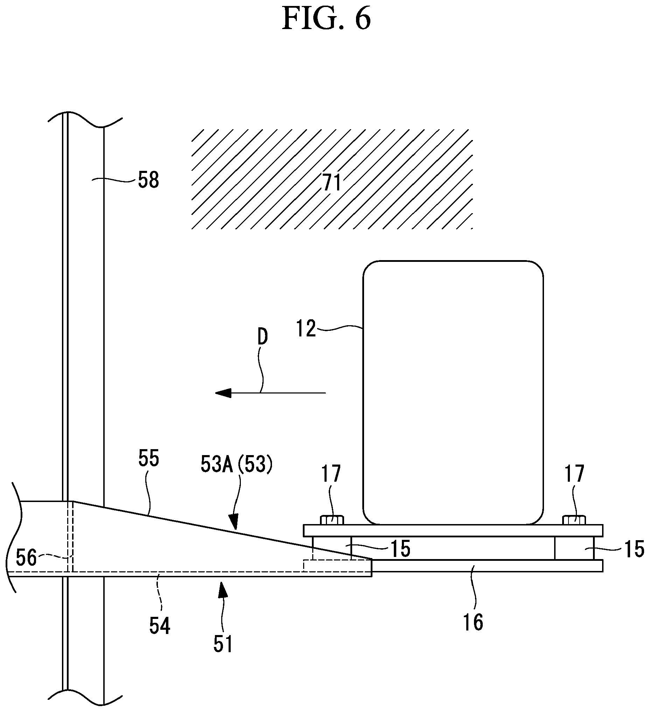

   Fig. 6 is a front view illustrating a state in which the compressor in Fig. 2 is being slid on a guide portion formed at a lower portion strength member.
[Fig. 7]

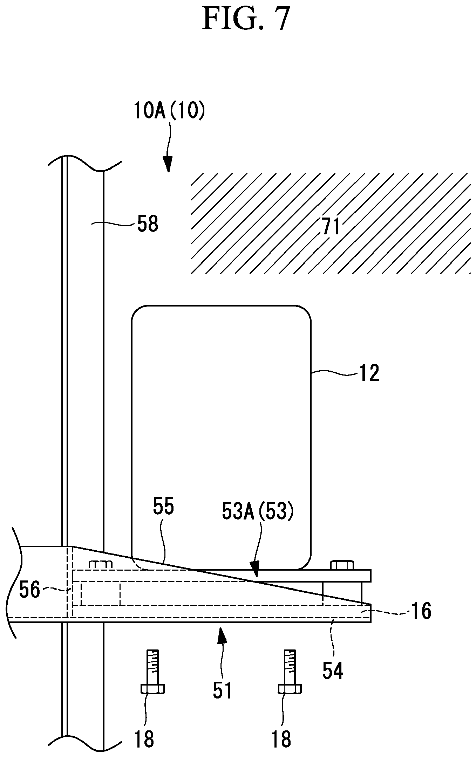

   Fig. 7 is a front view illustrating the transport chiller unit according to the first embodiment of the present invention.
[Fig. 8]

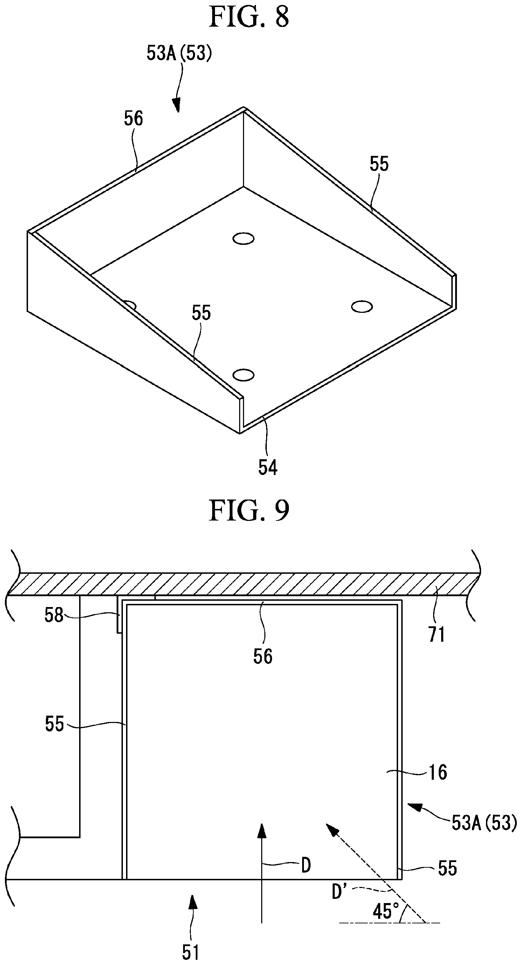

   Fig. 8 is a perspective view illustrating the guide portion according to the first embodiment of the present invention.
[Fig. 9]
   Fig. 9 is a plan view illustrating another example of the guide portion according to the first embodiment of the present invention.
[Fig. 10]

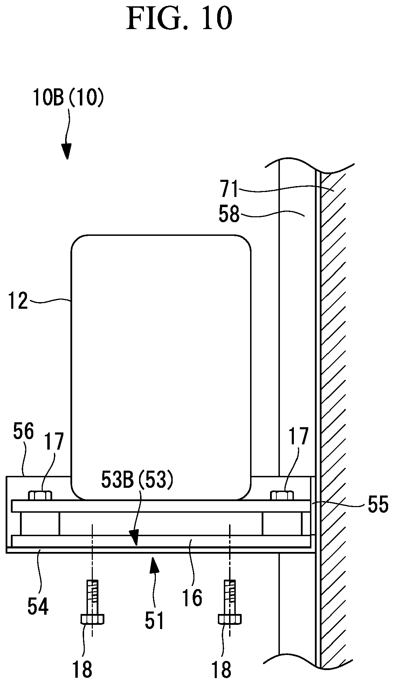

   Fig. 10 is a right side view illustrating a transport chiller unit according to a second embodiment of the present invention.
[Fig. 11]

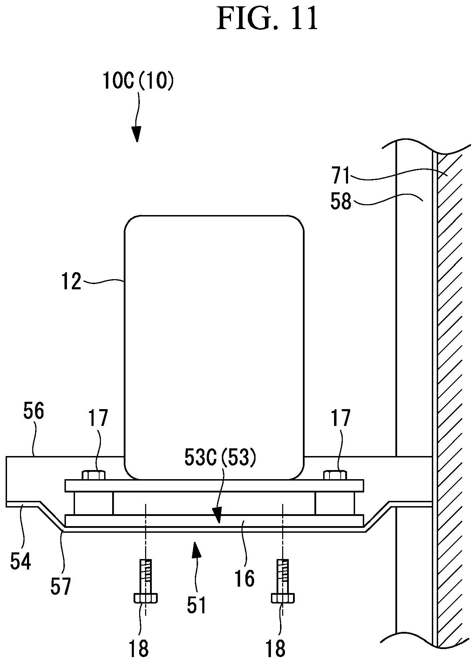

   Fig. 11 is a right side view illustrating an example of a transport chiller unit according to a third embodiment of the present invention.
[Fig. 12]

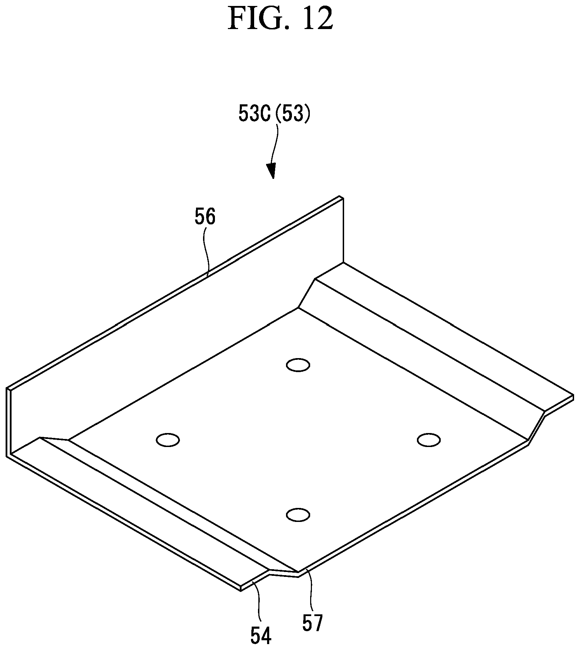

   Fig. 12 is a perspective view illustrating a guide portion according to the third embodiment of the present invention.
[Fig. 13]

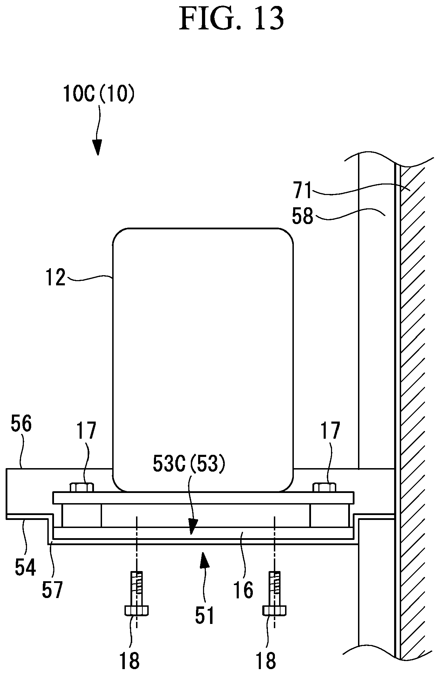

   Fig. 13 is a right side view illustrating another example of a transport chiller unit according to the third embodiment of the present invention.

### [Description of Embodiments]

Hereinafter, a transport chiller unit and a method for assembling the transport chiller unit according to an embodiment of the present invention will be described with reference to drawings.

### [First embodiment]

A transport chiller unit 10A according to a first embodiment of the present invention will be described. Fig. 1 illustrates a compressor 12 seated in a truck 70. The compressor 12 is, for example, an inverter-driven electric compressor. The compressor 12 is used as one of devices configuring a chilling cycle used for cooling a cargo compartment in a van body included in a truck 70.

The compressor 12 is seated inside a casing 73 of a nose mounted-type transport chiller unit 10A attached to a body front wall 71 of the van body of the truck 70 that is a heat insulating material. The casing 73 has a substantially inverted triangular longitudinal sectional shape with a long side positioned on the side of the body front wall 71 such that the casing 73 does not interfere with a cab tilt path T when a cabin provided in the truck 70 is lifted (cab tilting). The space inside the casing 73 in the height direction thus increases toward the body front wall 71.

As illustrated in Fig. 2, a vibration-isolating member 15 and a sub-bracket 16 are provided below the compressor 12.

The vibration-isolating member 15 includes, for example, a vibration-insulating rubber and attenuates vibration. The sub-bracket 16 is a rectangular plate-shaped element. Upper fastening members 17 such as bolts are attached at four points (see Fig. 3) at four corners of the sub-bracket 16. The sub-bracket 16 is fixed and assembled on the lower side of the compressor 12 via the vibration-isolating member 15 with these upper fastening members 17.

Fig. 4 illustrates a right side view illustrating a lower portion strength member 51 provided inside the casing 73, a longitudinal strength member (another strength member) 58, and the body front wall 71.

The lower portion strength member 51 is a strength member that bears the strength of the structure inside the casing 73 of the transport chiller unit 10A and extends in the horizontal direction. Also, the lower portion strength member 51 is fixed with rigidity to the longitudinal strength member 58 that is another strength member. A lower portion space A that is a space with such a size that allows for an access of an operator is formed below the lower portion strength member 51.

The longitudinal strength member 58 is a strength member that bears the strength of the structure inside the casing 73 of the transport chiller unit 10A and extends in the vertical direction. The longitudinal strength member 58 is, for example, a pole in the longitudinal direction that configures a frame.

The lower portion strength member 51 includes a bottom plate 54 with a rectangular shape in a plan view (see Fig. 3), a pair of side wall plates 55 standing at a right angle from two facing sides (the left-right direction illustrated in Fig. 4) of the bottom plate 54, and a back wall plate 56 standing at a right angle from one side (the left side illustrated in Fig. 3) that intersects the two sides.

Fig. 5 illustrates a view of the transport chiller unit 10A according to the present embodiment in a right side view. The inner width dimension between the pair of side wall plates 55 corresponds to the width dimension of the sub-bracket 16 fixed below the compressor 12. It is thus possible to cause the pair of side wall plates 55 to act as a guide for the compressor 12 (sub-bracket 16) when the compressor 12 is placed on the lower portion strength member 51 and is caused to slide in a slide direction D, as illustrated in Fig. 6. It is thus possible to cause the compressor 12 on the lower portion strength member 51 to slide in a stable state. In addition, since the lower portion strength member 51 includes the back wall plate 56, it is possible to position, as a fixation position of the compressor 12, the position where the compressor 12 (sub-bracket 16) that has been caused to slide abuts on the back wall plate 56 as illustrated in Fig. 7. In other words, a guide portion 53A is formed by the bottom plate 54, the pair of side wall plates 55, and the back wall plate 56 included in the lower portion strength member 51 as in the perspective view illustrated in Fig. 8.

As illustrated in Figs. 3, 5, and 7, if the compressor placed on the lower portion strength member 51 is positioned by the guide portion 53A, then the sub-bracket 16 fixed below the compressor 12 is fixed at four points with lower fastening members 18 sub as bolts from the lower side of the lower portion strength member 51. The compressor 12 is thus fixed to the lower portion strength member 51.

As illustrated in Figs. 3 and 5, the compressor 12 is disposed near the body front wall 71 in order to secure a space in the height direction inside the casing 73. Also, the compressor 12 is disposed near the longitudinal strength member 58 in order to secure fixation strength. Therefore, the workspace is reduced in size above the lower portion strength member 51 and in the vicinity of the body front wall 71 and the longitudinal strength member 58. Moreover, since a refrigerant pipe, a wiring, and the like, which are not illustrated, are also concentrated, a work difficulty space S is present.

In a case in which it is attempted to fix the compressor 12 directly to the lower portion strength member 51 from the upper side of the lower portion strength member 51, a fixing operation in the vicinity of the body front wall 71 and the longitudinal strength member 58, that is, in the work difficulty space S inevitably occurs.

However, since it is possible to utilize the lower portion space A below the lower portion strength member 51, and the compressor 12 is fixed from the lower side of the lower portion strength member 51 via the sub-bracket 16, as illustrated in Fig. 5, it is possible to widely set a range in which the lower fastening members 18 can fasten as compared with a case in which the compressor 12 is fixed directly to the lower portion strength member 51 from the upper side of the lower portion strength member 51 in the present embodiment. It is thus possible to cause the fastening positions of the lower fastening members 18 at the four points to be positioned further inward (on the center side in the radial direction of the compressor 12) than the upper fastening members 17 fastened at the four corners of the compressor 12 and to avoid an operation in the work difficulty space S.

According to the present embodiment, the following effects are achieved.

It is possible to secure a space in the height direction by disposing the compressor 12 in the vicinity of the body front wall 71. Also, it is possible to secure fixation strength by disposing the compressor 12 in the vicinity of the longitudinal strength member 58. It is thus possible to secure fixation strength of the compressor 12 without enlargement of the outer dimension of the casing 73 and significant reinforcement to secure the fixation strength, to secure a workspace for the seating of the compressor 12, and to improve operability.

Also, it is not necessary to perform the fixing operation in the work difficulty space S reduced in size by the compressor 12 disposed in the vicinity of the longitudinal strength member 58 and the body front wall 71, and it is possible to further improve operability, by fixing the compressor 12 positioned on the lower portion strength member 51 from the lower side of the lower portion strength member 51.

Further, it is possible to easily perform stable sliding and positioning of the compressor 12 placed on the lower portion strength member 51 with the guide portion 53A formed by the bottom plate 54, the pair of side wall plates 55, and the back wall plate 56 included in the lower portion strength member 51. This is particularly advantageous in a case in which the compressor 12 is a heavy component.

Note that the guide portion 53A may be formed with the pair of side wall plates 55 and the back wall plate 56 included in the lower portion strength member 51 such that the slide direction D is the up-down direction (solid line arrow) illustrated in Fig. 9. Also, the slide direction may have an angle with respect to the up-down direction in the plane illustrated in Fig. 9, and for example, the guide portion 53A may be formed with the pair of side wall plates 55 and the back wall plate 56 included in the lower portion strength member 51 such that the sliding can be achieved at an angle of 45 degrees as the slide direction D' represented by the dashed line.

### [Second embodiment]

Next, a transport chiller unit 10B according to a second embodiment of the present invention will be described. The present embodiment is different from the first embodiment in the form of the guide portion 53, and the other points are similar to those in the first embodiment. Therefore, only points different from the first embodiment will be described, and description of the other points will be omitted by using the same reference signs.

Fig. 10 illustrates a right side view of the transport chiller unit 10B according to the present embodiment. A lower portion strength member 51 includes a bottom plate 54 and a back wall plate 56 standing at a right angle from one side of the bottom plate 54 similarly to the first embodiment. Also, the lower portion strength member 51 includes a side wall plate 55 vertically standing from another side orthogonal to the one side. No wall portion vertically standing is provided at the side facing the side wall plate 55. It is thus possible to cause the compressor 12 to slide in a state in which the compressor 12 is caused to follow the one side wall plate 55. Also, since the lower portion strength member 51 includes the back wall plate 56, the compressor 12 is positioned at a position where the compressor 12 (sub-bracket 16) that has been caused to slide abuts on the back wall plate 56. In other words, a guide portion 53B is formed by the bottom plate 54, the one side wall plate 55, and the back wall plate 56 included in the lower portion strength member 51. Also, the sub-bracket 16 fixed below the positioned compressor 12 is fixed at four points with lower fastening members 18 such as bolts from the lower side of the lower portion strength member 51. The compressor 12 is thus fixed to the lower portion strength member 51.

According to the present embodiment, the following effects are achieved.

It is possible to easily perform stable sliding and positioning of the compressor 12 placed on the lower portion strength member 51 with the guide portion 53B formed by the bottom plate 54, the one side wall plate 55, and the back wall plate 56 included in the lower portion strength member 51. Also, since the side wall plate 55 is provided only at the one side of the bottom plate 54, it is possible to curb an increase in weight of the lower portion strength member 51 as compared with the first embodiment in which the pair of side wall plates are provided. In other words, it is possible to curb an increase in weight of the entire transport chiller unit 10B.

### [Third embodiment]

Next, a transport chiller unit 10C according to a third embodiment of the present invention will be described. The present embodiment is different from the first embodiment in the form of the guide portion 53, and the other points are the same as those in the first embodiment. Therefore, only points different from the first embodiment will be described, and description of the other points will be omitted by using the same reference signs.

Fig. 11 illustrates a right side view of the transport chiller unit 10C according to the present embodiment. A lower portion strength member 51 includes a bottom plate 54 and a back wall plate 56 standing at a right angle from one side of the bottom plate 54 similarly to the first embodiment. Also, the bottom plate 54 is provided with a drop-in groove portion 57. The drop-in groove portion 57 is a groove with a substantially recessed shape with a groove direction conforming to the slide direction D (see Fig. 3) and forms a taper with a groove width tapered from a groove upper portion toward a groove bottom portion. The width dimension of the groove bottom portion corresponds to the width dimension of a sub-bracket 16 fixed below the compressor 12. It is thus possible to cause the compressor 12 to slide in a state in which the compressor 12 is caused to follow the groove direction of the drop-in groove portion 57. Also, since the lower portion strength member 51 includes the back wall plate 56, the compressor 12 is positioned at a position where the compressor 12 (sub-bracket 16) that has been caused to slide abuts on the back wall plate 56. In other words, a guide portion 53C is formed by the bottom plate 54, the drop-in groove portion 57, and the back wall plate 56 included in the lower portion strength member 51 as in the perspective view illustrated in Fig. 12. Also, a sub-bracket 16 fixed below the positioned compressor 12 is fixed at four points with lower fastening members 18 such as bolts from the lower side of the lower portion strength member 51 as illustrated in Fig. 11. The compressor 12 is thus fixed to the lower portion strength member 51.

According to the present embodiment, the following effects are achieved.

It is possible to easily perform stable sliding and positioning of the compressor 12 placed on the lower portion strength member 51 with the guide portion 53C formed by the bottom plate 54, the drop-in groove portion 57, and the back wall plate 56 included in the lower portion strength member 51. Also, the drop-in groove portion 57 forms a taper with a groove width tapered from the groove upper portion toward the bottom portion. It is thus possible to easily drop the compressor 12 in the drop-in groove portion 57 and to easily position the compressor 12 in the groove direction of the drop-in groove portion 57. Further, since a side wall plate 55 as those in the first and second embodiments is not included, it is possible to curb an increase in weight of the lower portion strength member 51. In other words, it is possible to curb an increase in weight of the entire transport chiller unit 10C.

Note that the drop-in groove portion 57 may be a parallel groove with no taper formed therein as illustrated in Fig. 13. In this case, stability of the compressor 12 in the groove width direction of the drop-in groove portion 57 is improved as compared with the drop-in groove portion 57 with a taper formed therein.

Further, it is a matter of course that the tapered shape as described above can be applied to the side wall plates 55 in other embodiments.

Although the sub-bracket 16 is fixed at the four points with the lower fastening members 18 such as bolts in the aforementioned embodiments, the number of fixing locations can appropriately be changed and may be three, five, or more. In addition, the number of fixing locations of the upper fastening members 17 can also appropriately be changed and may be three, five, or more, and the positions of the fixing locations are also not limited to the four corners and can appropriately be changed. Four example, three, five, or more upper fastening members 17 may be disposed in an annular shape around the center of the compressor 12 in thee radial direction.

### [Reference Signs List]

- 10 (10A, 10B, 10C): Transport chiller unit
- 12: Compressor
- 15: Vibration-isolating member
- 16: Sub-bracket
- 17: Upper fastening member
- 18: Lower fastening member
- 51: Lower portion strength member
- 53 (53A, 53B, 53C): Guide portion
- 54: Bottom plate
- 55: Side wall plate
- 56: Back wall plate
- 57: Drop-in groove portion
- 58: Longitudinal strength member (another strength member)
- 70: Truck
- 71: Body front wall
- 73: Casing
- A: Lower portion space
- D: Slide direction
- S: Work difficulty space
- T: Cab tilt path

## Claims

1. A transport chiller unit (10) comprising:
a casing (73) configured to be attached to a body front wall (71) of a van body, the casing (73) comprising an inside space in a height direction that increases toward the body front wall (71);
a compressor (12) disposed inside the casing (73) to compress a refrigerant;
a vibration-isolating member (15) provided below the compressor (12);
a sub-bracket (16) supporting the vibration-isolating member (15) from a lower side, the compressor (12) being fixed to the sub-bracket (16) via the vibration-isolating member (15); and
a lower portion strength member (51) extending in a horizontal direction as a strength member provided inside the casing (73),
**characterized in that** the lower portion strength member (51) supports the sub-bracket (16) from the lower side and, the sub-bracket (16) being fixed to the lower portion strength member (51) from the lower side at a fixation position,
**in that** another strength member (58) is provided inside the casing (73), extending in a vertical direction, and connected to the lower portion strength member (51),
**in that** the compressor (12) is configured to be disposed in the vicinity of the body front wall (71) and disposed in the vicinity of the other strength member (58), and
**in that** the lower portion strength member (51) is provided with a guide portion (53) that slides the sub-bracket (16) in the horizontal direction and positions the sub-bracket (16) at the fixation position.

2. The transport chiller unit (10) according to claim 1,
wherein the guide portion (53) includes a bottom plate (54) with a rectangular shape in a plan view, a pair of side wall plates (55) standing from two facing sides of the bottom plate, and a back wall plate (56) standing from one side that intersects the two facing sides,
an inner width dimension between the pair of side wall plates (55) corresponds to a width dimension of the sub-bracket (16), and
the fixation position is defined by the pair of side wall plates (55) and the back wall plate (56).

3. The transport chiller unit according to claim 1,
wherein the guide portion (53) includes a bottom plate (54) with a rectangular shape in a plan view, a side wall plate (55) standing from one side of the bottom plate (54), and a back wall plate (56) standing from another side orthogonal to the one side, and
the fixation position is defined by the side wall plate (55) and the back wall plate (56).

4. The transport chiller unit according to claim 1,
wherein the guide portion (53) includes a bottom plate (54) with a rectangular shape in a plan view, a drop-in groove portion (57) provided in the bottom plate (54), and a back wall plate (56) standing from one side of the bottom plate (54) orthogonal to a groove direction of the drop-in groove portion (57),
a groove width dimension of the drop-in groove portion (57) corresponds to a width dimension of the sub-bracket (16), and
the fixation position is defined by the drop-in groove portion (57) and the back wall plate (56).

5. The transport chiller unit according to any one of claims 1 to 4, wherein the sub-bracket (16) is fixed from the lower side of the lower portion strength member (51).

6. A method for assembling the transport chiller unit (10) of any one of claims 1 to 5, the method comprising:
a compressor assembling step of fixing a sub-bracket (16) below the compressor via a vibration-isolating member (15) ;
a compressor placement step of placing the sub-bracket (16) fixed to the compressor (12) on a lower portion strength member (51) extending in a horizontal direction as a strength member provided inside the casing (73);
a positioning step of causing the compressor (12) to slide on a guide portion (53) provided at the lower portion strength member and positioning the compressor (12) at a fixation position; and
a seating step of fixing the sub-bracket (16), in the vicinity of the body front wall (71) and the other strength member (58), from a lower side of the lower portion strength member (51), the compressor (12) being fixed to the sub-bracket (16), the sub-bracket (16) being positioned by the guide portion (53).

## Patentansprüche

1. Transportkühleinheit (10), die Folgendes umfasst:
ein Gehäuse (73), das dazu ausgelegt ist, an einer Aufbauvorderwand (71) eines Lastwagenaufbaus befestigt zu sein, wobei das Gehäuse (73) einen Innenraum in Höhenrichtung umfasst, der zur Aufbauvorderwand (71) hin größer wird;
einen Verdichter (12) zum Verdichten eines Kältemittels, der im Gehäuse (73) angeordnet ist;
ein Schwingungsisolierungselement (15), das unter dem Verdichter (12) bereitgestellt ist;
eine Unterhalterung (16), die das Schwingungsisolierungselement (15) von einer Unterseite stützt, wobei der Verdichter (12) via das Schwingungsisolierungselement (15) an der Unterhalterung (16) fixiert ist; und
ein unteres Abschnittsfestigkeitselement (51), das sich als ein im Gehäuse (73) bereitgestelltes Festigkeitselement in eine horizontale Richtung erstreckt,
**dadurch gekennzeichnet, dass** das untere Abschnittsfestigkeitselement (51) die Unterhalterung (16) von der Unterseite stützt und die Unterhalterung (16) von der Unterseite in einer Fixierungsposition am unteren Abschnittsfestigkeitselement (51) fixiert ist,
dadurch, dass im Gehäuse (73) ein weiteres Festigkeitselement (58) bereitgestellt ist, das sich in eine vertikale Richtung erstreckt und mit dem unteren Abschnittsfestigkeitselement (51) verbunden ist,
dadurch, dass der Verdichter (12) dazu ausgelegt ist, in der Nähe der Aufbauvorderwand (71) angeordnet zu sein und in der Nähe des weiteren Festigkeitselements (58) angeordnet zu sein, und
dadurch, dass das untere Abschnittsfestigkeitselement (51) mit einem Führungsabschnitt (53) versehen ist, auf dem die Unterhalterung (16) in der horizontalen Richtung gleitet und die die Unterhalterung (16) in der Fixierungsposition positioniert.

2. Transportkühleinheit (10) nach Anspruch 1,
wobei der Führungsabschnitt (53) eine Bodenplatte (54) mit einer Rechteckform in einer Draufsicht, ein Paar von Seitenwandplatten (55), die von zwei einander zugewandten Seiten der Bodenplatte vorstehen, und eine Rückwandplatte (56), die von einer Seite vorsteht, die die zwei einander zugewandten Seiten schneidet, beinhaltet,
eine innere Breitenabmessung zwischen dem Paar von Seitenwandplatten (55) entspricht einer Breitenabmessung der Unterhalterung (16), und
die Fixierungsposition ist durch das Paar von Seitenwandplatten (55) und die Rückwandplatte (56) definiert.

3. Transportkühleinheit nach Anspruch 1,
wobei der Führungsabschnitt (53) eine Bodenplatte (54) mit einer Rechteckform in einer Draufsicht, eine Seitenwandplatte (55), die von einer Seite der Bodenplatte (54) vorsteht, und eine Rückwandplatte (56), die von einer anderen Seite orthogonal zu der einen vorsteht, beinhaltet, und
die Fixierungsposition ist durch die Seitenwandplatte (55) und die Rückwandplatte (56) definiert.

4. Transportkühleinheit nach Anspruch 1,
wobei der Führungsabschnitt (53) eine Bodenplatte (54) mit einer Rechteckform in einer Draufsicht, einen Einsatznutabschnitt (57), der in der Bodenplatte (54) bereitgestellt ist, und eine Rückwandplatte (56), die von einer Seite der Bodenplatte (54) orthogonal zu einer Nutrichtung des Einsatznutabschnitts (57) vorsteht, beinhaltet,
eine Nutbreitenabmessung des Einsatznutabschnitts (57) entspricht einer Breitenabmessung der Unterhalterung (16), und
die Fixierungsposition ist durch den Einsatznutabschnitt (57) und die Rückwandplatte (56) definiert.

5. Transportkühleinheit nach einem der Ansprüche 1 bis 4, wobei die Unterhalterung (16) von der Unterseite des unteren Abschnittsfestigkeitselements (51) fixiert ist.

6. Verfahren zum Montieren der Transportkühleinheit (10) nach einem der Ansprüche 1 bis 5, wobei das Verfahren Folgendes umfasst:
einen Verdichtermontageschritt zum Fixieren der Unterhalterung (16) via ein Schwingungsisolierungselement (15) unter dem Verdichter;
einen Verdichterplatzierungsschritt zum Platzieren der Unterhalterung (16), die am Verdichter (12) fixiert ist, an einem unteren Abschnittsfestigkeitselement (51), das sich als ein im Gehäuse (73) bereitgestelltes Festigkeitselement in eine horizontale Richtung erstreckt;
einen Positionierungsschritt zum Bewirken, dass der Verdichter (12) auf einem Führungsabschnitt (53), der am unteren Abschnittsfestigkeitselement bereitgestellt ist, gleitet, und Positionieren des Verdichters (12) in einer Fixierungsposition; und
einen Setzschritt zum Fixieren der Unterhalterung (16) in der Nähe der Aufbauvorderwand (71) und des weiteren Festigkeitselements (58) von einer Unterseite des unteren Abschnittsfestigkeitselements (51), wobei der Verdichter (12) an der Unterhalterung (16) fixiert ist, wobei die Unterhalterung (16) durch den Führungsabschnitt (53) positioniert wird.

## Revendications

1. Unité de refroidissement de transport (10) comprenant :
un carter (73) configuré pour être fixé à une paroi avant de corps (71) d'un corps de camion, le carter (73) comprenant un espace intérieur dans une direction de hauteur qui augmente vers la paroi avant de corps (71) ;
un compresseur (12) disposé à l'intérieur du carter (73) pour comprimer un réfrigérant ;
un élément d'isolation de vibration (15) prévu au-dessous du compresseur (12) ;
un support secondaire (16) supportant l'élément d'isolation de vibration (15) depuis un côté inférieur, le compresseur (12) étant fixé sur le support secondaire (16) via l'élément d'isolation de vibration (15) ; et
un élément de résistance de partie inférieure (51) s'étendant dans une direction horizontale en tant qu'élément de résistance prévu à l'intérieur du carter (73),
**caractérisée en ce que** l'élément de résistance de partie inférieure (51) supporte le support secondaire (16) depuis le côté inférieur, et le support secondaire (16) étant fixé sur l'élément de résistance de partie inférieure (51) depuis le côté inférieur dans une position de fixation,
**en ce qu'**un autre élément de résistance (58) est prévu à l'intérieur du carter (73), s'étendant dans une direction verticale, et raccordé à l'élément de résistance de partie inférieure (51),
**en ce que** le compresseur (12) est configuré pour être disposé à proximité de la paroi avant de corps (71) et disposé à proximité de l'autre élément de résistance (58), et
**en ce que** l'élément de résistance de partie inférieure (51) est prévu avec une partie de guidage (53) qui fait glisser le support secondaire (16) dans la direction horizontale et positionne le support secondaire (16) dans la position de fixation.

2. Unité de refroidissement de transport (10) selon la revendication 1,
dans laquelle la partie de guidage (53) comprend une plaque inférieure (54) avec une forme rectangulaire sur une vue en plan, une paire de plaques de paroi latérales (55) se dressant à partir de deux côtés en vis-à-vis de la plaque inférieure, et une plaque de paroi arrière (56) se dressant à partir d'un côté qui coupe les deux côtés en vis-à-vis,
une dimension de largeur interne entre la paire de plaques de paroi latérales (55) correspond à une dimension de largeur du support secondaire (16), et
la position de fixation est définie par la paire de plaques de paroi latérale (55) et la plaque de paroi arrière (56).

3. Unité de refroidissement de transport selon la revendication 1,
dans laquelle la partie de guidage (53) comprend une plaque inférieure (54) avec une forme rectangulaire sur une vue en plan, une plaque de paroi latérale (55) se dressant à partir d'un côté de la plaque inférieure (54), et une plaque de paroi arrière (56) se dressant à partir d'un autre côté orthogonal par rapport au un côté, et
la position de fixation est définie par la plaque de paroi latérale (55) et la plaque de paroi arrière (56).

4. Unité de refroidissement de transport selon la revendication 1,
dans laquelle la partie de guidage (53) comprend une plaque inférieure (54) avec une forme rectangulaire sur une vue en plan, une partie de rainure de caisse (57) prévue dans la plaque inférieure (54) et une plaque de paroi arrière (56) se dressant à partir d'un côté de la plaque inférieure (54) orthogonale à une direction de rainure de la partie de rainure de caisse (57),
une dimension de largeur de rainure de la partie de rainure de caisse (57) correspond à une dimension de largeur du support secondaire (16), et
la position de fixation est définie par la partie de rainure de caisse (57) et la plaque de paroi arrière (56).

5. Unité de refroidissement de transport selon l'une quelconque des revendications 1 à 4, dans laquelle le support secondaire (16) est fixé à partir du côté inférieur de l'élément de résistance de partie inférieure (51).

6. Procédé pour assembler l'unité de refroidissement de transport (10) selon l'une quelconque des revendications 1 à 5, le procédé comprenant :
une étape d'assemblage de compresseur consistant à fixer un support secondaire (16) au-dessous du compresseur via un élément d'isolation de vibration (15) ;
une étape de mise en place de compresseur consistant à mettre en place le support secondaire (16) fixé sur le compresseur (12) sur un élément de résistance de partie inférieure (51) s'étendant dans une direction horizontale en tant qu'élément de résistance prévu à l'intérieur du carter (73) ;
une étape de positionnement consistant à amener le compresseur (12) à glisser sur une partie de guidage (53) prévue au niveau de l'élément de résistance de partie inférieure et positionner le compresseur (12) dans une position de fixation ; et
une étape d'installation consistant à fixer le support secondaire (16) à proximité de la paroi avant de corps (71) et l'autre élément de résistance (58), à partir d'un côté inférieur de l'élément de résistance de partie inférieure (51), le compresseur (12) étant fixé sur le support secondaire (16), le support secondaire (16) étant positionné par la partie de guidage (53).
